## Europäisches Patentamt
## European Patent Office
## Office européen des brevets

(11) Publication number: **0 138 593**
**B1**

# EUROPEAN PATENT SPECIFICATION

(45) Date of publication of patent specification: **09.08.89**

(51) Int. Cl.⁴: **G 01 G 19/32**

(21) Application number: **84306993.1**

(22) Date of filing: **12.10.84**

(54) **Combinatorial weighing.**

(30) Priority: **14.10.83 JP 191992/83**

(43) Date of publication of application:
**24.04.85 Bulletin 85/17**

(45) Publication of the grant of the patent:
**09.08.89 Bulletin 89/32**

(84) Designated Contracting States:
**DE FR GB IT**

(56) References cited:
**EP-A-0 060 633**

(73) Proprietor: **KABUSHIKI KAISHA ISHIDA KOKI SEISAKUSHO**
**44, Shogoin Sannou-cho Sakyo-ku**
**Kyoto-shi Kyoto 606 (JP)**

(72) Inventor: **Fukuda, Masao**
**326-144, Bodaiji Kousei-cho**
**Kouga-gun Shiga (JP)**

(74) Representative: **Fane, Christopher Robin King et al**
**HASELTINE LAKE & CO. Hazlitt House 28**
**Southampton Buildings Chancery Lane**
**London, WC2A 1AT (GB)**

Courier Press, Leamington Spa, England.

**Description**

The present invention relates to combinatorial weighing apparatus.

A known kind of combinatorial weighing apparatus, having a plurality of weighing machines for measuring the weights of articles therein, operates by combining weight values provided by the respective weighing machines, selecting a combination of weight values which is equal in total to a target weight, or closest to the target weight and within an allowable preset range, discharging articles from the weighing machines which give the selected combination, and then recharging the emptied weighing machines with new articles. The above process is then repeated for successive automatic weighing operations.

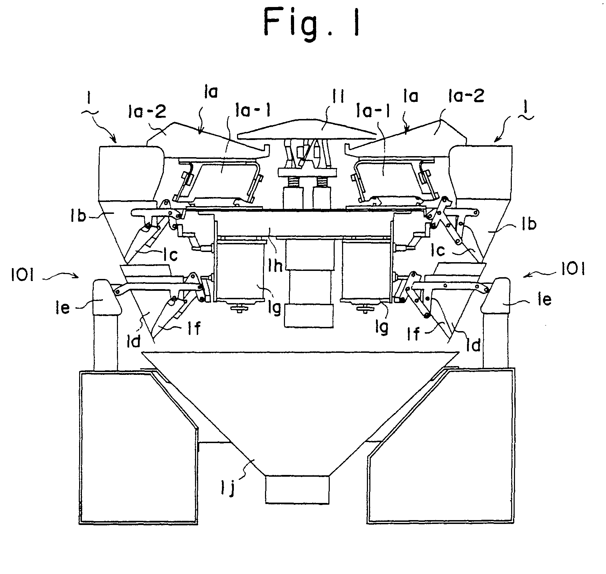

Fig. 1 of the accompanying drawings shows schematically a vertical axial sectional view of a combinatorial weighing apparatus for effecting such a combinatorial weighing operation. The apparatus includes a distribution table 11 for distributing articles radially outwardly to charge them into a plurality of $n$ weighing sections 1, 1,...1 extending radially from the table 11 and circumferentially spaced therearound. The distribution table 11 has a vibratory feeding capability and vibrates for a given interval of time for supplying the articles into the weighing sections. Each of the $n$ weighing sections 1 has a weighing machine 101 comprising a distributive supply unit 1a, a pool hopper 1b, a pool hopper gate 1c, a hopper driver 1g, a weighing hopper 1d, and a weight detector 1e. The distributive supply units 1a are radially mounted on a support table 1h in circumferentially surrounding relation to the distribution table 11, and each distributive supply unit 1a has an electromagnetic vibrator 1a-1 and a trough 1a-2. Articles supplied from the distribution table 1a-1 to the trough 1a-2 are charged from a distal end of the trough 1a-2 into the pool hopper 1b by linear reciprocable movement of the electromagnetic vibrator 1a-1. The articles charged in each pool hopper 1b are then charged into the weighing hopper 1d when the hopper gate 1c is opened under the control of the hopper driver 1g. The articles charged in each weighing hopper 1d are measured for their weight by the associated weight detector 1e. The weight of the articles as measured by the weight detector 1e is applied as an input to a combinatorial processor unit, described later. The combinatorial processor unit subjects the weight values to combinatorial weighing processing to find an optimum combination of weights. The weighing hoppers 1d of the weighing machines selected as giving the optimum combination are emptied to discharge the articles by opening the weighing hopper gates 1f by means of the hopper drivers 1g. The articles discharged from the weighing hoppers 1d fall into a collection chute 1j disposed below the weighing hoppers 1d, and are collected and delivered to a packaging machine (not shown). The collection chute 1j has a conical shape or a polygonal funnel shape. The articles are collected in the collection chute 1j by gravity or forcibly by a scraper (not shown) so that the articles will be gathered from an inner peripheral surface of the collection chute 1j toward a lower central position therein.

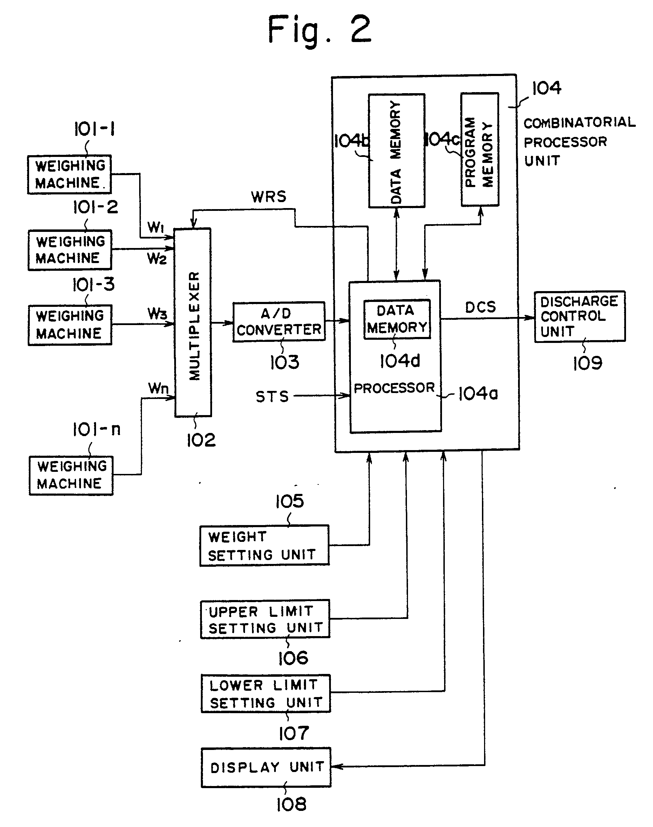

Fig. 2 is a block diagram of the combinatorial weighing apparatus. The combinatorial weighing apparatus includes $n$ weighing machines 101-1,...,101-n each composed of the weighing hopper 1d and the weight detector 1e, described above, for weighing respective individual quantities of supplied articles and issuing weight values Wi ($i=1,2,...,n$). A multiplexer 102 issues the weight values Wi from the weighing machines 101-1,...,101-n successively in response to a weight readout signal WRS, the multiplexer 102 being composed of analog switches and the like. The analog weight values Wi issued from the multiplexer 102 are converted into digital values by an A/D converter 103. A combinatorial weighing processor unit 104 in the form of a computer basically includes a processor (central processing unit) 104a, a data memory 104b comprising a RAM, and a program memory 104c storing a program for combinatorial processing, the processor 104a having a general-purpose register 104d. To the combinatorial weighing procesor unit 104 are connected a weight setting unit 105 for setting a target weight value, upper and lower limit setting units 106, 107 for setting a preferable allowable preset range of combinatorial total weights, a display unit 108 for displaying a combinatorial total weight, selected weighing machines, weighing failures, and other information, and a discharge control unit 109.

Weighing operation of the combinatorial weighing apparatus shown in Fig. 2 will be described with reference to the flowchart of Fig. 3 and Fig. 4.

(1) When a start signal (timing signal) STS is generated by a packaging machine (not illustrated), the start signal STS is read by the processor 104a which then starts a combinatorial weighing operation.

(2) Then, the processor 104a issues a weight readout signal WRS to the multiplexer 102 to enable the multiplexer 102 to apply the weight values Wi ($i=1,2,...,n$) successively to the A/D converter 103. The weight values Wi applied to the A/D converter are then converted thereby into digital signals which are fed to the combinatorial control unit 104, wherein the digital signals are stored by the processor 104a into the data memory 104b.

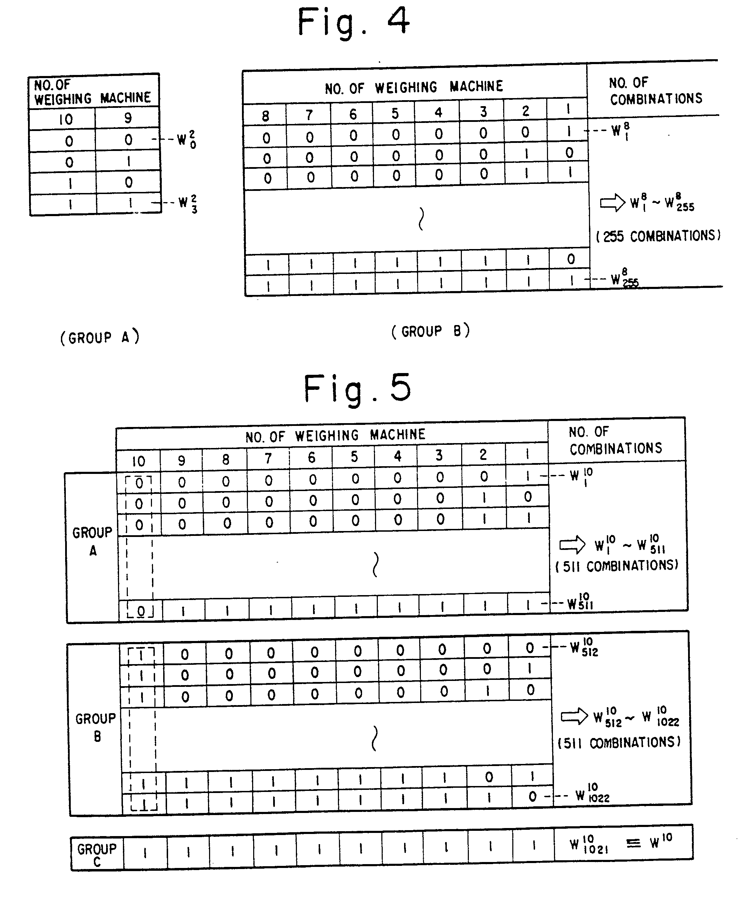

(3) Thereafter, the processor 104a effects $2^n-1$ combinatorial computations under the control of the combinatorial processing program. Where there are ten weighing machines, it can be advantageous to combine detected weight data items from the ten weighing machines in group B composed of 1st through 8th weighing machines and in group A composed of 9th and 10th weighing machines as shown in Fig. 4. Since $n=8$ in group B, there are $2^8-1=255$ combinations. With such combination patterns, the general-purpose register 104d in the processor 104a has a 1st bit allotted to the 1st weighing machine 101-1, a 2nd bit to the 2nd weighing machine 101-2,..., an $n$th bit to the $n$th weighing machine 101-n, and the general-purpose register 104d counts from 1 up to $2^n-1$ to find $2^n-1$ combinations from 0000...001 to 1111...111.

2

# EP 0 138 593 B1

In Fig. 4, the symbol $W_i^a$ indicates an $i$th data item given by a combination of $a$ elements. According to this definition, $W_1^8$, for example, is indicative of a 1st added weight (combinatorial total weight) out of all combinations of eight weight data items ($W_1$, $W_2$,...$W_8$), and is equal to $W_1$. As another example, $W_{255}^8 = W_1 + W_2 + ... W_8$.

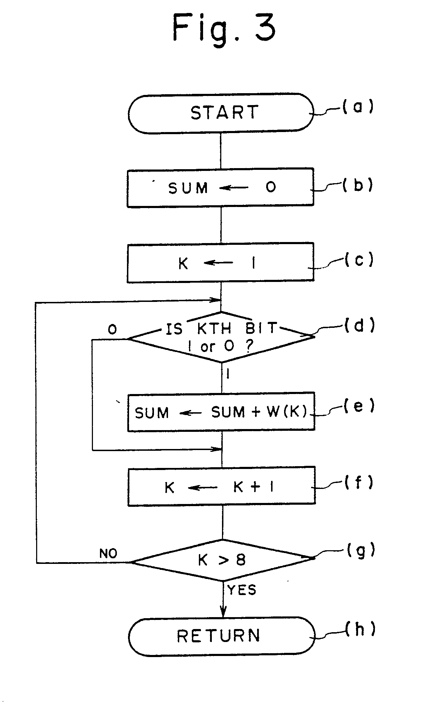

(4) Fig. 3 is a flowchart of a subroutine for determining one sum total weight (combinatorial total weight). This subroutine is executed each time one combination pattern is generated. At the time of starting the subroutine, an added weight value SUM is set to zero in a step b. Then, the processor 104a sets the numeral k stored in the data memory 104b to "1" in a step c.

(5) The processor 104a than checks bits of selected and non-selected weighing machines in a combinatorial pattern, that is, checks if the $k$th bit in a combinatorial pattern is "1" or "0" in a step d.

(6) The processor 104a adds the weight value corresponding to a "1" bit in a combinatorial pattern to the added weight SUM in a step e.

(7) The processor 104a successively updates the numerical value $k$ and repeats bit checking and weight addition in steps d, e and f, until $k>8$ in step g.

(8) The above process will be described on the basis of specific numerals with reference to Fig. 4. The processor 104a first computes all combinatorial total weight data items ($W_1^8$, $W_2^8$,...,$W_{255}^8$) expressed in group B, and stores the data items in the data memory 104b. Then, the processor 104a adds the data items in group B and the data items in group A to find an optimum value closest to a target weight value. Since $W_0^2 = 0$ in group A, three combinations ($W_1^2$, $W_2^2$, $W_3^2$) may be added to each of the combinations of group B. Such computations are effected by the combinatorial processor unit 104 as follows:

1) Bit checking in combinatorial pattern:

Bit checking between selected and non-selected weighing machines is effected 8 times each time the subroutine of Fig. 3 is executed once. The subroutine of Fig. 3 is executed as many times as there are combinations of the eight weighing machines. Therefore, the total number of bit checking occurrences is

$$8 \times 255 = 2040 \qquad \text{(i)}$$

2) Number of weight additions:

For selecting one out of eight weighing machines, there are 8 combinations since $_8C_1=8$. The number of weight additions required in this case is $8 \times 1 = 8$.

For selecting two out of eight weighing machines, there are 28 combinations since $_8C_2=28$. The number of weight additions required is $28 \times 2 = 56$ since two additions need to be made for each combination. It follows therefore that the number of weight additions required for all combinations (255) in selecting one to eight weighing machines is given by:

$$(_8C_1 \times 1) + (_8C_2 \times 2) + (_8C_3 \times 3) + (_8C_4 \times 4)$$
$$+ (_8C_5 \times 5) + (_8C_6 \times 6) + (_8C_7 \times 7) + (_8C_8 \times 8)$$
$$= (8 \times 1) + (28 \times 2) + (56 \times 3) + (70 \times 4)$$
$$+ (56 \times 5) + (28 \times 6) + (8 \times 7) + (1 \times 8) = 1024 \qquad \text{(ii)}$$

Furthermore, one addition is required to compute $W_3^2$ in group A (for adding the weights from the 10th and 9th weighing machines), and $3 \times 255 = 765$ additions are required to be made between groups A and B. Therefore, the total number of weight additions is:

$$1024 + 1 + 765 = 1790 \qquad \text{(iii)}$$

The combinatorial processor unit 104 selects a combination closest to the target weight value, out of the combinatorial sum total weights thus produced, and controls the discharge control unit 109 to discharge the articles from the weighing machines which give such an optimum combination of weights. Thereafter, the combinational processor unit 104 controls the pool hoopers to supply articles to the emptied weighing machines, and then waits for a next start signal from the packaging machine.

It is desirable to provide a method of combinatorial weighing, in a combinatorial weighing apparatus such as that of Figures 1 and 2, wherein the time required for computations to find an optimum weight combination can be shortened as compared with the method described hereinbefore.

According to the present invention there is provided combinatorial weighing apparatus, for weighing out a desired batch of articles, comprising:

a plurality of weighing machines for receiving individual quantities of the articles to be weighed and providing respective weight values indicative of the weights of the individual quantities concerned; and

selection means operatively arranged and connected for employing respective combination patterns of digits, which digits refer respectively to individual machines of the said plurality, to designate, for each of two preselected mutually distinct groups of the machines, all possible combinations of the weight values provided respectively by the machines of the group concerned and finding, for each of those combinations, the sum total of the weight values making up that combination, and storing that sum total in respect of the combination concerned, and for employing the resulting sum totals to select an optimum combination of

3

the said individual quantities, having a total combined weight equal or closest to a preset target weight value, and for causing the individual quantities belonging to the selected combination to be discharged from their machines, and brought together to form such a desired batch, if the said total combined weight is within a preset range of allowable values;

The apparatus being such that the operation of the selection means involves dividing the possible combinations of the machines of one of the said two groups into two sub-groups such that the combination patterns designating the combinations of one of the subgroups are complementary respectively to the combination patterns designating the combinations of the other sub-group, the said sum total for each combination of the said other sub-group being then found by subtracting the sum total found in respect of its complementary combination, in the said one sub-group, from the sum total of all the weight values of the said one group.

It should be noted, incidentally, that in EP—A—0 060 633 the present applicants have disclosed an alternative way, not directly relevant to the present invention, of processing the values from weighing machines, of a combinatorial weighing apparatus, in which method also the machines are dealt with as a plurality of mutually distinct groups of machines.

Further reference will now be made, by way of example, to the accompanying drawings, in which:

Fig. 1 is a schematic side elevational view of a combinatorial weighing apparatus in which an embodiment of the present invention can be incorporated;

Fig. 2 is a block diagram of electronic circuitry of the apparatus of Fig. 1;

Fig. 3 is a flowchart of a computing sub-routine;

Fig. 4 is a diagram showing possible combination patterns of weight data items for use as described hereinbefore;

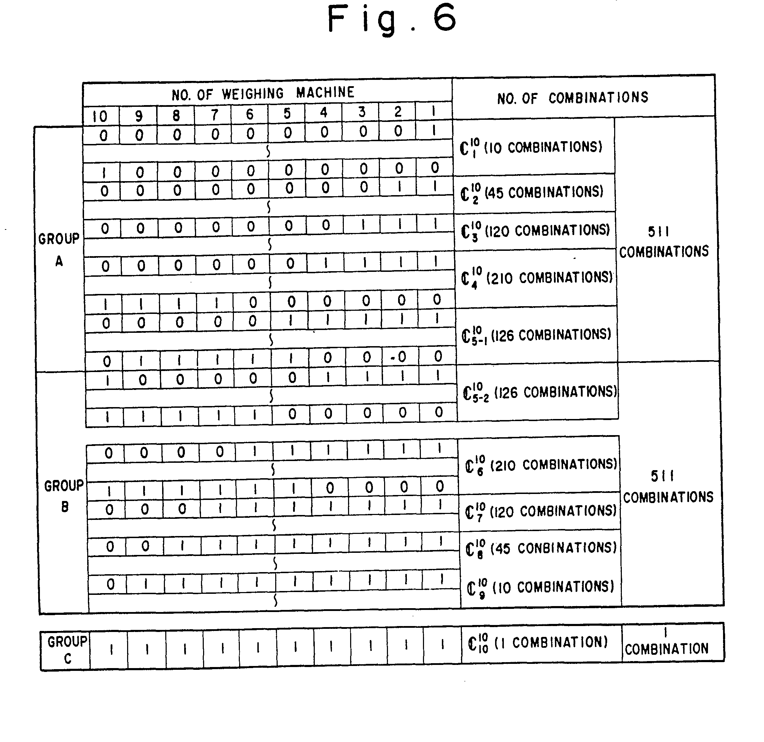

Figs. 5 and 6 are diagrams showing alternative combination patterns of weight data items, for assistance in understanding embodiments of the present invention;

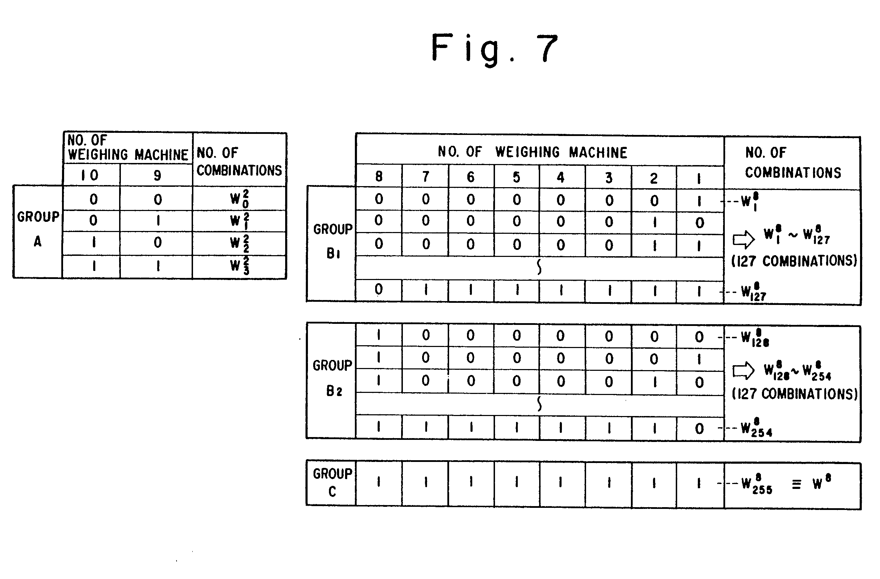

Fig. 7 is a diagram of combination patterns of weight data items employed in an embodiment of the present invention;

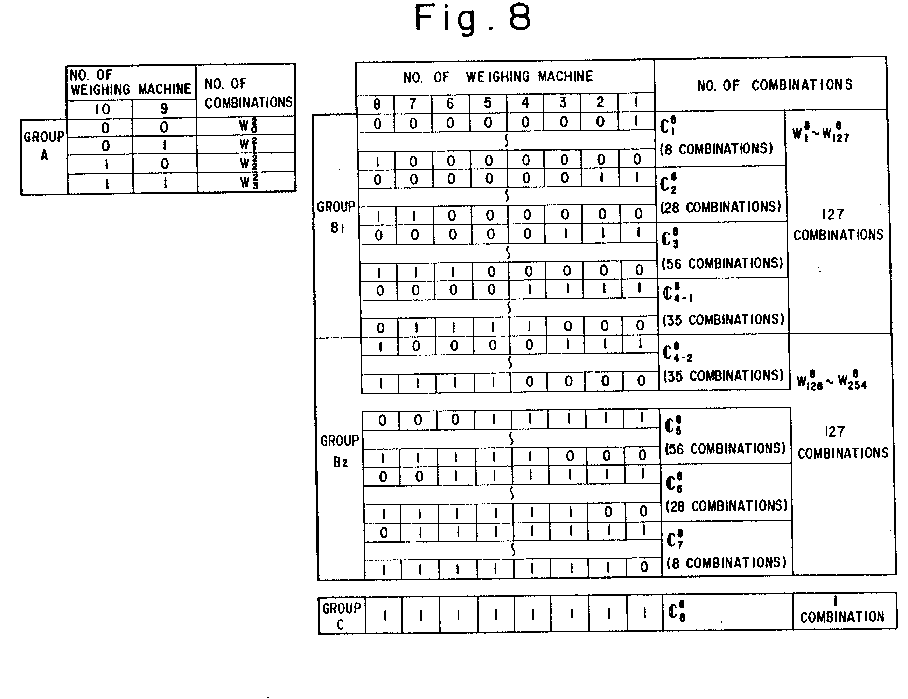

Fig. 8 is a diagram of combination patterns employed in another embodiment of the present invention;

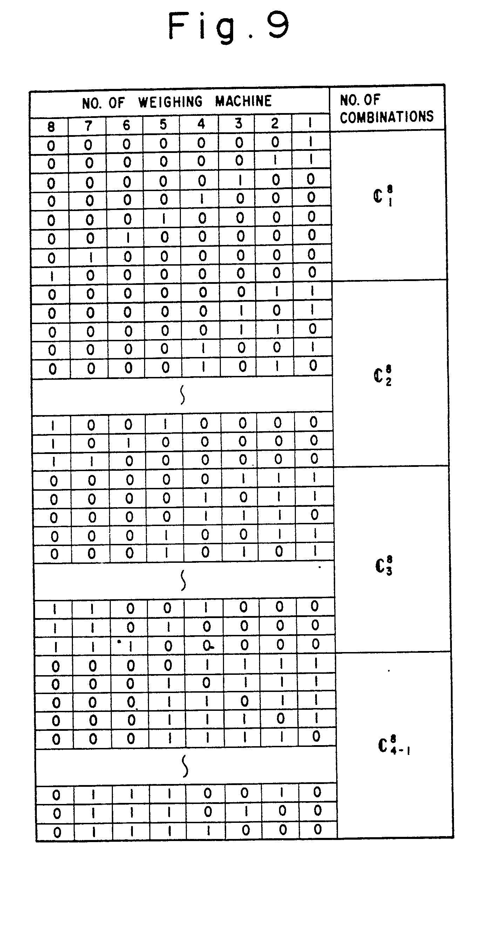

Fig. 9 is a diagram of combination patterns, employed in an embodiment of the invention, as they are stored in a memory; and

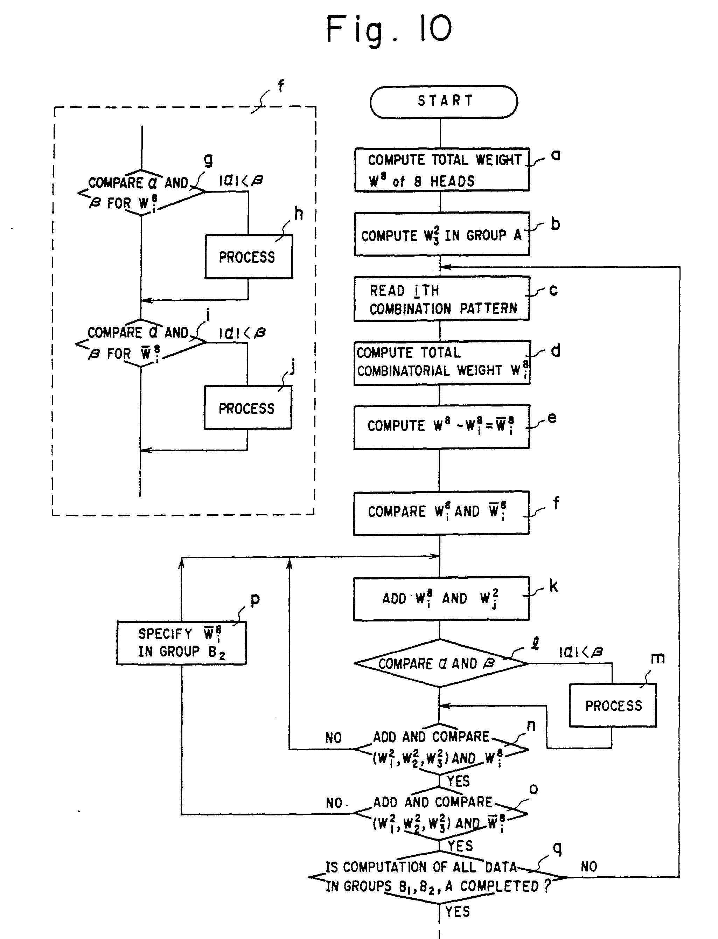

Fig. 10 is a flowchart of successive steps of combinatorial computation as performed in an apparatus embodying the present invention.

Combinatorial weighing methods will now be described in greater detail, with reference to the drawings, in accordance with four different pattern systems.

[I] Pattern 1:

Fig. 5 is illustrative of combination patterns of binary digits stored in a memory as two groups A and B, giving a corresponding division of the combinatorial sum total weights into a first set $(W_1^{10}$ to $W_{511}^{10})$ and a second set $(W_{512}^{10}$ to $W_{1022}^{10})$. Bits which are all "1" are stored as a group C. The combination patterns of group A are respectively complementary to those of group B. More specifically, where $W^{10}$ is the sum total weight of the whole set, group B can be expressed as:

$$B = \overline{A} = W^{10} - A \qquad (1)$$

Since the group B can be found from the equation (1), after effecting computations to find combinatorial sum total weights of the group A only, such combinatorial computations for the set B are rendered unnecessary.

Therefore, the number of steps required for the computations is as follows:

1) Bit checking:

Since a pattern of group B is a complement of a pattern of group A, bit checking need only be effected with respect to group A. Only 9 bits are checked as there is no bit of "1" for the 10th weighing machine in Group A. Thus, the number of bit checking operations is:

$$9 \times 511 = 4599 \qquad (i)$$

2) Number of additions:
a) Groups A and C:

As described with reference to Fig. 4, the number of additions for group A is given as follows:

$$
\begin{aligned}
&(_9C_1 \times 1) + (_9C_2 \times 2) + (_9C_3 \times 3) + (_9C_4 \times 4) \\
&+ (_9C_5 \times 5) + (_9C_6 \times 6) + (_9C_7 \times 7) + (_9C_8 \times 8) + (_9C_9 \times 9) \\
&= (9 \times 1) + (36 \times 2) + (84 \times 3) + (126 \times 4) \\
&+ (126 \times 5) + (84 \times 6) + (36 \times 7) + (9 \times 8) + (1 \times 9) \\
&= 2304 \qquad\qquad\qquad\qquad\qquad\qquad\qquad\qquad\qquad (ii)
\end{aligned}
$$

4

In order to compute the sum of the weights of the ten weighing machines, the addition of:

$$W_{1023}^{10}=W_1+W_2+\ldots+W_{10}$$

is effected, and hence 10 additions are necessary. As a result, the number of additions for groups A and C is:

$$2304+10=2314 \qquad\qquad \text{(iii)}$$

b) Group B:

Each combinatorial sum total weight value for group B is determined by subtraction, using the equation (1), and 511 computations are required. The total number of computations for groups A, B, and C is given as follows:

c) The number of computations required for all of groups A, B, and C is:

$$2314+511=2825 \qquad\qquad \text{(iv)}$$

[II] Pattern 2:

Fig. 6 shows combination patterns divided into groups A and B in a manner different from that of the Pattern 1 system.

The symbol $C_i^a$ used here is indicative of a set of combination patterns, each of $a$ bits, just $i$ of the bits in each pattern being 1.

$C_{5-1}^{10}$ and $C_{5-2}^{'10}$ are complements of each other, and

$$C_5^{10}=C_{5-1}^{'10}+C_{5-2}^{'10} \qquad\qquad \text{(2)}$$
$$C_{5-2}^{'10}=\overline{C}_{5-1}^{'10}=C_5^{10}-C_{5-1}^{'10} \qquad\qquad \text{(3)}$$

Therefore, assuming that the group A and the group B are expressed by:

$$A=C_1^{10}\ U\ C_2^{10}\ U\ C_3^{10}\ U\ C_4^{10}\ U\ C_{5-1}^{'10} \qquad\qquad \text{(4)}$$
$$B=C_{5-2}^{'10}\ U\ C_6^{10}\ U\ C_7^{10}\ U\ C_8^{10}\ U\ C_9^{10} \qquad\qquad \text{(5)}$$

[where U is the sum (OR) of sets]

then,

$$\left.\begin{array}{ccc}
\text{(Group B)} & & \text{(Group A)} \\
C_9^{10} & = & \overline{C}_1^{10} \\
C_8^{10} & = & \overline{C}_2^{10} \\
C_7^{10} & = & \overline{C}_3^{10} \\
C_6^{10} & = & \overline{C}_4^{10} \\
C_{5-2}^{'10} & = & \overline{C}_{5-1}^{'10}
\end{array}\right\} \qquad\qquad \text{(6)}$$

Therefore, the group B can be derived from the group A, and combinatorial weight additions need be effected only for the combinations of the group A.

Thus, the number of steps required for the computations is as follows:

1) Bit checking:

No bit checking is necessary for the group B, so only group A need be checked. The number of bit checking operations required is:

$$10\times511=5110 \qquad\qquad \text{(i)}$$

2) Number of additions:

a) Groups A and C:

The number of additions for group A is given as follows:

$$(_{10}C_1\times1)+(_{10}C_2\times2)+(_{10}C_3\times3)+(_{10}C_4\times4)+(_{10}C_5\times5)\times1/2$$
$$=(10\times1)+(45\times2)+(120\times3)+(210\times4)+(252\times5)\times1/2$$
$$=1930 \qquad\qquad \text{(ii)}$$

The sum of weights of the 10 heads for group C is:

$$_{10}C_{10}\times10=10 \qquad\qquad \text{(iii)}$$

The number of additions for groups A and C is:

$$(ii)+(iii)=1930+10=1940 \tag{iv}$$

b) Group B:

Group B is determined by subtracting the combinatorial total weight of group A from group C, the number of subtractions required is 511.

c) The number of computations required for all of groups A, B and C is:

$$1940+511=2451 \tag{v}$$

[III] Pattern 3:

Fig. 7 is a diagram of combination patterns according to an embodiment of the present invention. Pattern 3 is a mixture of the patterns shown in Fig. 4 and Pattern 1 in Fig. 5. More specifically, according to the combination patterns of Fig. 7, the 1st through 8th weighing machines are in groups B and C, and the 9th and 10th weighing machines are in group A, with group B being divided into group $B_1$ and group $B_2$ which is a complement of group $B_1$. Therefore, the following relationship is present between groups $B_2$ and $B_1$:

$$B_2=\overline{B}_1=W^8-B_1 \tag{7}$$

(where $W_8$ is representative of the total weight of the 1st through 8th weighing machines)

The number of steps required in this case is as follows:

1) Bit checking:

The number of bit checking operations for the 1st through 7th weighing machines in group $B_1$ is

$$7\times127=889 \tag{i}$$

2) Number of additions:

a) First the number of additions for $W_1^8-W_{127}^8$ for group $B_1$ is as follows:

$$(_7C_1\times1)+(_7C_2\times2)+(_7C_3\times3)+(_7C_4\times4)+(_7C_5\times5)+(_7C_6\times6)+(_7C_7\times7)$$
$$=(7\times1)+(21\times2)+(35\times3)+(35\times4)+(21\times5)+(7\times6)+(1\times7)$$
$$=448 \tag{ii}$$

b) Then, one addition is effected for $W_3^2$ (the 10th and 9th weighing machines) for group A without bit checking $\tag{iii}$

c) 127 substractions are effected according to the equation (7) for computing group $B_2$ $\tag{iv}$

d) The number of combinations of groups $B_1$, $B_2$ and group A (combinations of $W_1^8-W_{254}^8$ and $W_1^2-W_3^2$) is:

$$254\times3=762. \tag{v}$$

e) The number of additions for computing the total weight of the 1st through 8th weighing machines is 8 $\tag{vi}$

By adding a) through e), the total weight number of additions required is found to be

$$448+1+127+254\times3+8=1346 \tag{vii}$$

[IV] Pattern 4:

Fig. 8 is a diagram of combination patterns according to another embdoiment of the present invention. The illustrated combination patterns are a mixture of Patterns 2 and 3. Pattern 4 differs from Pattern 3 in that groups $B_1$ and $B_2$ are divided by the system of Pattern 2 (Fig. 6). The number of steps required for computations in Pattern 4 is as follows:

1) Bit checking:

The number of bit checking operations for the 1st through 8th weighing machines in group $B_1$ is

$$8\times127=1016 \tag{i}$$

2) Number of additions:

a) First the number of additions for $W_1^8-W_{127}^8$ (group $B_1$) is as follows:

6

EP 0 138 593 B1

$$({}_8C_1 \times 1) + ({}_8C_2 \times 2) + ({}_8C_3 \times 3) + ({}_8C_4 \times 4) \times 1/2$$
$$= (8 \times 1) + (28 \times 2) + (56 \times 3) + (70 \times 4) \times 1/2 \qquad \text{(ii)}$$
$$= 372$$

b) Then, one addition is effected for $W_3^2$ (the 9th and 10th weighing machines) for group A  (iii)

c) 8 additions for computing the total weight of the 1st through 8th weighing machines  (iv)

d) 127 subtractions are effected according to the equation (7) for computing group $B_2$  (v)

e) The number of combinations of groups $B_1$, $B_2$ and group A is:

$$254 \times 3 = 762 \qquad \text{(vi)}$$

Adding a) through e) gives the overall total number of additions:

$$372 + 1 + 8 + 127 + 254 \times 3 = 1270 \qquad \text{(vii)}$$

The numbers of occurrences of bit checking and computations for the Fig. 4 example and Patterns 1 through 4 are given for comparison in Table 1:

TABLE 1

| Process No. | Fig. 4 | Pattern 1 | Pattern 2 | Pattern 3 | Pattern 4 |
|---|---|---|---|---|---|
| Bit checking | 2040 | 4599 | 5110 | 889 | 1016 |
| Computations | 1790 | 2825 | 2451 | 1346 | 1270 |

As is apparent from Table 1, although the number of computations for Patterns 1 and 2 is greater than the Fig. 4 number of computations, the number of computations for Patterns 3 and 4 is smaller than the Fig. 4 number of computations. Therefore, Patterns 3 and 4 allow a shorter time interval required for finding an optimum combination of weights. The number of occurrences of bit checking is smaller for Pattern 3 than for Pattern 4. However, Pattern 4 is more advantageous since the time required for the overall computation process is shorter as the number of computations is smaller.

Steps of a computation process according to Pattern 4 will be described with reference to the flowchart of Fig. 10.

(1) the processor 104a in the combinatorial processor unit 104 (Fig. 2) computes the total weight ($W^8$) of the 1st through 8th weighing machines in a step $a$.

(2) The processor 104a computes the weight $W_3^2$ by adding the weights of the 9th and 10th weighing machines in a step $b$.

(3) In a step $c$, the processor 104a reads an $i$th combination pattern (the 1st combination pattern is 00000001) out of the combination patterns of a group $B_1$, shown in Fig. 9, from the data memory.

(4) In a step $d$, the processor 104a computes the $i$th combinatorial total weight $W_i^8$ in group $B_1$ according to the combination pattern read out in step $c$.

(5) In a step $e$, the processor 104a computes the combinatorial total weight $\overline{W}_i^8 (= W^8 - W_i^8)$ of the combination pattern in a group $B_2$ that is the complement of the pattern giving the computed combinatorial total weight $W_i^8$.

(6) In a step $f$, the processor 104a carries out comparison and processing procedures for the computed combinatorial total weights $W_i^8$ and $\overline{W}_i^8$.

Such comparison and processing procedures are carried out in illustrated steps $g$ and $h$, in steps $i$ and $j$, and in steps $l$ and $m$ to be described below. These procedures involve in each case the finding of the difference $\alpha$ between a target weight Ws, preset in the weight setting unit 105 (Fig. 2), and a combinatorial total weight W as follows:

$$W - Ws \rightarrow \alpha.$$

The processor then determines whether or not a minimum deviation value $\beta$ currently stored in the data memory is greater than the difference $\alpha$. If so ($|\alpha| < \beta$), then the stored minimum deviation value $\beta$ is replaced by the smaller difference value $|\alpha|$ concerned, and the combination pattern corresponding to that difference $|\alpha|$ is stored in the data memory in place of the previous best combination pattern stored there

7

hitherto. Since the minimum deviation has an initial value which is set as a binary number expressed by all 1s, $|\alpha| < \beta$ for the first combination of Fig. 9.

The processor 104a applies the above-described comparison and processing procedures to both of the combinatorial total weights $W_i^8$ and $\overline{W_i^8}$ in turn, in the steps g, h, i and j shown in Fig. 10 as details of the step f.

(7) The processor 104a then adds, in a step $k$, the $i$th combinatorial total weight $W_i^8$ of group $B_1$ and a $j$th combinatorial total weight $W_j^2$ of a group A such as that shown in Fig. 8. For the first step $k(j=1)$, for the first combination pattern of group $B_1(i=1)$, these weights added together will comprise the combinatorial total weights $W_1^8$ and $W_1^2$.

(8) In steps l and m the processor 104a applies the above-described comparison and processing procedures to the total combinatorial weight $(W_i^8 + \overline{W_j^2})$ found in step k, and thereby updates the data identifying the best combination pattern found so far.

(9) For the current value $W_i^8$ of group $B_1$, the sequence of steps $k$ through $m$ is carried out three times, respectively for the values $j=1,2,3,(W_1^2, W_2^2, W_3^2$ of group A). When a counter indicates $j>3$, the processor sets j to 1 ($j\rightarrow1$), and the program goes via a step $n$ to a next step $o$.

(10) Next the processor 104a repeats the above-described three sequences of steps ($k$ through $m$), but using $\overline{W_i^8}$ in place of $W_i^8$ (step $p$). Having thus added, compared and processed the complementary combinatorial total weight $\overline{W_i^8}$, of group $B_2$, with each of the values $W_1^2, W_2^2$ and $W_3^2$ (group A) in turn, the program goes from step $o$ to a next step $q$.

(11) In step $q$, the processor 104a determines whether the computation of all data items in groups $B_1$, $B_2$, and A has been completed, by ascerataining whether $i>127$.

If i is not greater than 127, then i is incremented by $+1(i\leftarrow i+1)$, and the program goes back to the step $c$. The steps $c$ through $q$ are then repeated, until i is found to be greater than 127, indicating that all of the required combinatorial computations have been completed.

When the combinatorial computations have been completed, an "optimum" combination pattern, for which the combinatorial total weight is equal or closest to the target weight value, is left stored in the data memory 104b. If the combinatorial total weight value of this "optimum" combination pattern falls within a preset allowable range, then the articles are discharged from the weighing machines designated by that combination pattern.

Although certain preferred embodiments have been shown and described, it should be understood that many changes and modifications may be made therein without departing from the scope of the appended claims.

**Claims**

1. Combinatorial weighing apparatus, for weighing out a desired batch of articles, comprising:

a plurality of weighing machines (101-1,...101-n) for receiving individual quantities of the articles to be weighed and providing respective weight values $(W_1,...W_n)$ indicative of the weights of the individual quantities concerned; and

selection means (104) operatively arranged and connected for employing respective combination patterns of digits, which digits refer respectively to individual machines of the said plurality, to designate, for each of two preselected mutually distinct groups (A, B) of the machines, all possible combinations of the weight values provided respectively by the machines of the group concerned and finding, for each of those combinations, the sum total (W) of the weight values making up that combination, and storing that sum total in respect of the combination concerned, and for employing the resulting sum totals to select an optimum combination of the said individual quantities, having a total combined weight equal or closest to a preset target weight value, and for causing the individual quantities belonging to the selected combination to be discharged from their machines, and brought together to form such a desired batch, if the said total combined weight is within a preset range of allowable values;

the apparatus being such that the operation of the selection means involves dividing the possible combinations of the machines of one of the said two groups into two sub-groups ($B_1$, $B_2$) such that the combination patterns designating the combinations of one of the subgroups are complementary respectively to the combination patterns designating the combinations of the other sub-group, the said sum total ($\overline{W_i^8}$) for each combination of the said other sub-group ($B_2$) being then found by subtracting the sum total ($W_i^8$) found in respect of its complementary combination, in the said one sub-group ($B_1$), from the sum total ($W^8$ of all the weight values of the said one group (B).

2. Apparatus as claimed in claim 1, such that the operation of the selection means involves finding, for each in turn of the said sum totals for the said one (B) of the two groups, the respective total weight values of all possible different combinations of the sum total concerned with the sum totals of the other (A) group.

3. Apparatus as claimed in claim 1 or 2, such that the operation of the selection means involves finding, for each in succession of the said sum totals found for the said one group (B), the individual difference between that sum total and the said preset target weight and, if the individual difference concerned is less than a previously stored difference, storing that individual difference in place of the previously stored difference and replacing a previously stored pattern combination, corresponding to the said previously stored difference, by the pattern combination corresponding to the sum total concerned.

4. Apparatus as claimed in claim 2, such that the operation of the selection means involves finding, for each in succession of the said sum totals found for the said one group (B) and for each in succession of the said total weight values found, the individual difference between that sum total or total weight value and the said preset target weight and, if the individual difference concerned is less than a previously stored difference, storing that individual difference in place of the previously stored difference and replacing a previously stored pattern combination, corresponding to the said previously stored difference, by the pattern combination corresponding to the sum total or total weight value concerned.

**Patentansprüche**

1. Kombinatorische Wägevorrichtung zum Auswägen einer gewünschten Artikelcharge, mit
einer Gruppe von Wägemaschinen (101-1,...101-n) zum Aufnehmen individueller Mengen der zu wägenden Artikel und zum Liefern jeweiliger die Gewichte der betreffenden individuellen Mengen anzeigender Gewichtswerte ($W_1$,...$W_n$); und
Wählmitteln (104), die so angeordnet und geschaltet sind, daß sie jeweilige Kombinationsmuster von Ziffern verwenden, welche jeweils individuelle Maschinen der genannten Gruppe betreffen, um für jede von zwei vorgewählten voneinander verschiedenen Gruppen (A, B) der Maschinen alle möglichen Kombinationen der jeweiligen von den Maschinen der betreffenden Gruppe gelieferten Gewichtswerte zu bezeichnen, und zum Auffinden der Gesamtsumme (W) der diese Kombination bildenen Gesamtgewichtswerte, für jede dieser Kombinationen, und Speichern dieser Gesamtsumme in Bezug auf die betreffende Kombination, und zum Verwenden der sich ergebenden Gesamtsummen zum Wählen einer optimalen Kombination der genannten individuellen Mengen, die ein kombiniertes Gesamtgewicht aufweisen, das einem vorgewählten Zielgewichtswert gleich oder am nächsten ist, und zum Veranlassen der Ausgabe der zu der ausgewählten Kombination gehörenden individuellen Mengen aus ihren Maschinen und des Zusammenbringens zum Bilden einer solchen erwünschten Charge, wenn das genannte kombinierte Gesamtgewicht innerhalb eines voreingestellen Bereichs von zulässigen Werten liegt:
wobei die Vorrichtung derart ausgebildet ist, daß die Betätigung der Wählmittel das Unterteilen der möglichen Kombinationen der Maschinen einer der genannten zwei Gruppen in zwei Untergruppen ($B_1$, $B_2$) derart beinhaltet, daß die Kombinationsmuster, welche die Kombinationen einer der Untergruppe bezeichnen, jeweils zu den Kombinationsmustern, welche die Kombinationen der anderen Untergruppe bezeichnen, komplementär sind, wobei die genannte Gesamtsumme ($\overline{W}_1^8$) für jede Kombination der genannten anderen Untergruppe ($B_2$) dann durch Subtrahieren der mit Bezug auf ihre komplementäre Kombination in der genannten einen Untergruppe ($B_1$) gefundenen Gesamtsumme ($W_1^8$) von der Gesamtsumme ($W^8$) aller Gewichtswerte der genannten einen Gruppe (B) gefunden wird.

2. Vorrichtung nach Anspruch 1 derart, daß die Betätigung der Wählmittel nacheinander für jede der genannten Gesamtsummen der genannten einen (B) der zwei Gruppen das Auffinden der jeweiligen Gesamtgewichtswerte aller möglichen verschiedenen Kombinationen der betreffenden Gesamtsumme mit der Gesamtsumme der anderen Gruppe (A) beinhaltet.

3. Vorrichtung nach Anspruch 1 oder 2 derart, daß die Betätigung der Wählmittel, nacheinander für jede der für die eine genannte Gruppe (B) gefundenen Gesamtzummen, das Auffinden der individuellen Differenz zwischen dieser Gesamtsumme und dem voreingestellten Zielgewicht, und, wenn die betreffende individuelle Differenz geringer als eine zuvor gespeicherte Differenz ist, das Speichern dieser individuellen Differenz anstelle der zuvor gespeicherten Differenz, und Ersetzen einer zuvor gespeicherten Musterkombination, die der genannten zuvor gespeicherten Differenz entspricht, durch die der betreffenden Gesamtsumme entsprechende Musterkombination beinhaltet.

4. Vorrichtung nach Anspruch 2, derart, daß die Betätigung der Wählmittel, nacheinander für jede der genannten für die eine genannte Gruppe (B) gefundenen Gesamtsummen und nacheinander für jede der genannten gefundenen Gesamtgewichtswerte, das Auffinden der individuellen Differenz zwischen dieser Gesamtsumme oder diesem Gesamtgewichtswert und dem voreingestellten Zielgewicht und, wenn die betreffende individuelle Differenz geringer als einer zuvor gespeicherte Differenz ist, das Speichern dieser individuellen Differenz anstelle der zuvor gespeicherten Differenz und das Ersetzen einer zuvor gespeicherten Musterkombination, die der genannten zuvor gespeicherten Differenz entspricht, durch die der betreffenden Gesamtsumme oder dan betreffenden Gesamtgewichtswert entsprechende Musterkombination beinhaltet.

**Revendications**

1. Appareil de pesée combinatoire, pour paser un lot voulu d'articles, comprenant:
une pluralité de machines de pesage (101-1...101-n) pour recevoir des quantités individuelles des articles à peser et fournir des valeurs respectives de poids ($W_1$...$W_n$) indicatives des poids des quantités individuelles concernées; et
des moyens de sélection (104) agencés de façon fonctionnelle et connectés pour employer des modèles respectifs de combinaisons de chiffres, lesquels chiffres se rapportent respectivement aux machines individuelles de ladite pluralité, pour désigner, pour chacun de deux groupes (A, B) mutuellement distincts présélectionnés des machines, toutes les combinaisons possibles des valeurs de

9

poids fournies respectivement par les machines du groupe concerné et pour trouver, pour chacune de ces combinaisons, la somme totale (W) des valeurs de poids constituant cette combinaison, et pour stocker cette somme totale par rapport à la combinaison concernée, et pour employer les sommes totales résultantes à la sélection d'une combinaison optimale desdites quantités individuelles, ayant un poids total combiné égal ou le plus proche d'une valeur préétablie de poids cible, et pour amener les quantités individuelles appartenant à la combinaison sélectionnée, à être déchargées de leurs machines, et à être groupées pour former un tel lot désiré, si ledit poids combiné total se trouve à l'intérieur d'une gamme préétablie de valeurs autorisées;

l'appareil étant tel que le fonctionnement du moyen de sélection implique la division des combinaisons possibles des machines d'un premier desdits deux groupes en deux sous-groupes ($B_1$, $B_2$) de telle sorte que les modèles de combinaisons désignant les combinasons d'un premier des sous-groupes soient respectivement complémentaires des modèles de combinaisons désignant les combinaisons de second sous-groupe, ladite somme totale ($\overline{W}_1^8$) pour chaque combinaison dudit second sous-groupe ($B_2$) étant alors trouvée par soustraction de la somme totale ($W_1^8$) trouvée par rapport à sa combinaison complémentaire, dans ledit premier sous-groupe ($B_1$), à partir de la somme totale ($W^8$) de toutes les valeurs de poids dudit premier groupe (B).

2. Appareil selon la revendication 1, tel que le fonctionnement du moyen de sélection implique de trouver, tout à tour, pour chacune desdites sommes totales relatives audit premier groupe (B) des deux groupes, les valeurs respectives de poids total de toutes les différentes combinaisons possibles de la somme totale concernée avec les sommes totales du second groupe (A).

3. Appareil selon la revendication 1 ou 2, dans lequel le fonctionnement du moyen de sélection implique de trouver, successivement, pour chacune desdites sommes totales trouvées pour ledit premier groupe (B), la différence individuelle entre cette somme totale et ledit poids cible préétabli et, si la différence individuelle concernée est inférieure à une différence antérieurement stockée, de stocker cette différence individuelle à la place de la différence antérieurement stockée et de remplacer une combinaison de modèles antérieurement stockée, correspondant à ladite différence antérieurement stockée, par la combinaison de modèles correspondant à la somme totale concernée.

4. Appareil selon la revendication 2, tel que le fonctionnement du moyen de sélection implique de trouver, successivement, pour chacune desdites sommes totales trouvées pour ledit premier groupe (B) et successivement pour chacune desdites valeurs totales de poids trouvées, la différence individuelle entre cette somme totale de la valeur totale de poids et ledit poids cible préétabli et, si la différence individuelle concernée est inférieure à une différence antérieurement stockée, de stocker cette différence individuelle à la place de la différence antérieurement stockée et de remplacer une combinaison de modèles antérieurement stockée, correspondant à ladite différence antérieurement stockée, par la combinaison de modèles correspondant à la somme totale ou à la valeur totale de poids concernée.

# Fig. 1

1

# Fig. 2

2

# Fig. 3

```
        START          (a)

        SUM ← 0        (b)

        K ← 1          (c)

    O ← IS KTH BIT     (d)
         1 or 0 ?
            1
   SUM ← SUM + W(K)    (e)

        K ← K + 1      (f)

   NO      K > 8       (g)
            YES
        RETURN         (h)
```

# Fig. 4

**(GROUP A)**

| NO. OF WEIGHING MACHINE | |  |
|---|---|---|
| 10 | 9 | |
| 0 | 0 | -- $W_0^2$ |
| 0 | 1 | |
| 1 | 0 | |
| 1 | 1 | -- $W_3^2$ |

**(GROUP B)**

| NO. OF WEIGHING MACHINE | | | | | | | | NO. OF COMBINATIONS |
|---|---|---|---|---|---|---|---|---|
| 8 | 7 | 6 | 5 | 4 | 3 | 2 | 1 | |
| 0 | 0 | 0 | 0 | 0 | 0 | 0 | 1 | -- $W_1^8$ |
| 0 | 0 | 0 | 0 | 0 | 0 | 1 | 0 | |
| 0 | 0 | 0 | 0 | 0 | 0 | 1 | 1 | |
| | | | ⟨ | | | | | ⟹ $W_1^8 \sim W_{255}^8$ (255 COMBINATIONS) |
| 1 | 1 | 1 | 1 | 1 | 1 | 1 | 0 | |
| 1 | 1 | 1 | 1 | 1 | 1 | 1 | 1 | -- $W_{255}^8$ |

# Fig. 5

| | NO. OF WEIGHING MACHINE | | | | | | | | | | NO. OF COMBINATIONS |
|---|---|---|---|---|---|---|---|---|---|---|---|
| | 10 | 9 | 8 | 7 | 6 | 5 | 4 | 3 | 2 | 1 | |
| GROUP A | 0 | 0 | 0 | 0 | 0 | 0 | 0 | 0 | 0 | 1 | -- $W_1^{10}$ |
| | 0 | 0 | 0 | 0 | 0 | 0 | 0 | 0 | 1 | 0 | |
| | 0 | 0 | 0 | 0 | 0 | 0 | 0 | 0 | 1 | 1 | |
| | | | | | ⟨ | | | | | | ⟹ $W_1^{10} \sim W_{511}^{10}$ (511 COMBINATIONS) |
| | 0 | 1 | 1 | 1 | 1 | 1 | 1 | 1 | 1 | 1 | -- $W_{511}^{10}$ |
| GROUP B | 1 | 0 | 0 | 0 | 0 | 0 | 0 | 0 | 0 | 0 | -- $W_{512}^{10}$ |
| | 1 | 0 | 0 | 0 | 0 | 0 | 0 | 0 | 0 | 1 | |
| | 1 | 0 | 0 | 0 | 0 | 0 | 0 | 0 | 1 | 0 | |
| | | | | | ⟨ | | | | | | ⟹ $W_{512}^{10} \sim W_{1022}^{10}$ (511 COMBINATIONS) |
| | 1 | 1 | 1 | 1 | 1 | 1 | 1 | 1 | 0 | 1 | |
| | 1 | 1 | 1 | 1 | 1 | 1 | 1 | 1 | 1 | 0 | -- $W_{1022}^{10}$ |
| GROUP C | 1 | 1 | 1 | 1 | 1 | 1 | 1 | 1 | 1 | 1 | $W_{1021}^{10} \equiv W^{10}$ |

4

# Fig. 6

| | NO. OF WEIGHING MACHINE | | | | | | | | | | NO. OF COMBINATIONS | |
|---|---|---|---|---|---|---|---|---|---|---|---|---|
| | 10 | 9 | 8 | 7 | 6 | 5 | 4 | 3 | 2 | 1 | | |
| GROUP A | 0 | 0 | 0 | 0 | 0 | 0 | 0 | 0 | 0 | 1 | $C_1^{10}$ (10 COMBINATIONS) | 511 COMBINATIONS |
| | | | | | | ∫ | | | | | | |
| | 1 | 0 | 0 | 0 | 0 | 0 | 0 | 0 | 0 | 0 | | |
| | 0 | 0 | 0 | 0 | 0 | 0 | 0 | 0 | 1 | 1 | $C_2^{10}$ (45 COMBINATIONS) | |
| | | | | | | ∫ | | | | | | |
| | 0 | 0 | 0 | 0 | 0 | 0 | 0 | 1 | 1 | 1 | $C_3^{10}$ (120 COMBINATIONS) | |
| | | | | | | ∫ | | | | | | |
| | 0 | 0 | 0 | 0 | 0 | 0 | 1 | 1 | 1 | 1 | $C_4^{10}$ (210 COMBINATIONS) | |
| | | | | | | ∫ | | | | | | |
| | 1 | 1 | 1 | 1 | 0 | 0 | 0 | 0 | 0 | 0 | | |
| | 0 | 0 | 0 | 0 | 0 | 1 | 1 | 1 | 1 | 1 | $C_{5-1}^{10}$ (126 COMBINATIONS) | |
| | | | | | | ∫ | | | | | | |
| | 0 | 1 | 1 | 1 | 1 | 1 | 0 | 0 | -0 | 0 | | |
| GROUP A | 1 | 0 | 0 | 0 | 0 | 0 | 1 | 1 | 1 | 1 | $C_{5-2}^{10}$ (126 COMBINATIONS) | |
| | | | | | | ∫ | | | | | | |
| | 1 | 1 | 1 | 1 | 1 | 0 | 0 | 0 | 0 | 0 | | |
| GROUP B | 0 | 0 | 0 | 0 | 1 | 1 | 1 | 1 | 1 | 1 | $C_6^{10}$ (210 COMBINATIONS) | 511 COMBINATIONS |
| | | | | | | ∫ | | | | | | |
| | 1 | 1 | 1 | 1 | 1 | 1 | 0 | 0 | 0 | 0 | | |
| | 0 | 0 | 0 | 1 | 1 | 1 | 1 | 1 | 1 | 1 | $C_7^{10}$ (120 COMBINATIONS) | |
| | | | | | | ∫ | | | | | | |
| | 0 | 0 | 1 | 1 | 1 | 1 | 1 | 1 | 1 | 1 | $C_8^{10}$ (45 CONBINATIONS) | |
| | | | | | | ∫ | | | | | | |
| | 0 | 1 | 1 | 1 | 1 | 1 | 1 | 1 | 1 | 1 | $C_9^{10}$ (10 COMBINATIONS) | |
| | | | | | | ∫ | | | | | | |
| GROUP C | 1 | 1 | 1 | 1 | 1 | 1 | 1 | 1 | 1 | 1 | $C_{10}^{10}$ (1 COMBINATION) | 1 COMBINATION |

# Fig. 7

| | NO. OF WEIGHING MACHINE | | NO. OF COMBINATIONS |
|---|---|---|---|
| | 10 | 9 | |
| GROUP A | 0 | 0 | $W_0^2$ |
| | 0 | 1 | $W_1^2$ |
| | 1 | 0 | $W_2^2$ |
| | 1 | 1 | $W_3^2$ |

| | NO. OF WEIGHING MACHINE | | | | | | | | NO. OF COMBINATIONS |
|---|---|---|---|---|---|---|---|---|---|
| | 8 | 7 | 6 | 5 | 4 | 3 | 2 | 1 | |
| GROUP B1 | 0 | 0 | 0 | 0 | 0 | 0 | 0 | 1 | -- $W_1^8$ |
| | 0 | 0 | 0 | 0 | 0 | 0 | 1 | 0 | $\Rightarrow W_1^8 \sim W_{127}^8$ |
| | 0 | 0 | 0 | 0 | 0 | 0 | 1 | 1 | (127 COMBINATIONS) |
| | | | | ∫ | | | | | |
| | 0 | 1 | 1 | 1 | 1 | 1 | 1 | 1 | -- $W_{127}^8$ |

| | 8 | 7 | 6 | 5 | 4 | 3 | 2 | 1 | |
|---|---|---|---|---|---|---|---|---|---|
| GROUP B2 | 1 | 0 | 0 | 0 | 0 | 0 | 0 | 0 | -- $W_{128}^8$ |
| | 1 | 0 | 0 | 0 | 0 | 0 | 0 | 1 | $\Rightarrow W_{128}^8 \sim W_{254}^8$ |
| | 1 | 0 | 0 | 0 | 0 | 0 | 1 | 0 | (127 COMBINATIONS) |
| | | | | ∫ | | | | | |
| | 1 | 1 | 1 | 1 | 1 | 1 | 1 | 0 | -- $W_{254}^8$ |

| | 8 | 7 | 6 | 5 | 4 | 3 | 2 | 1 | |
|---|---|---|---|---|---|---|---|---|---|
| GROUP C | 1 | 1 | 1 | 1 | 1 | 1 | 1 | 1 | -- $W_{255}^8 \equiv W^8$ |

EP 0 138 593 B1

# Fig. 8

| | NO. OF WEIGHING MACHINE | | NO. OF COMBINATIONS |
|---|---|---|---|
| | 10 | 9 | |
| GROUP A | 0 | 0 | $W_0^2$ |
| | 0 | 1 | $W_1^2$ |
| | 1 | 0 | $W_2^2$ |
| | 1 | 1 | $W_3^2$ |

| | NO. OF WEIGHING MACHINE | | | | | | | | NO. OF COMBINATIONS | |
|---|---|---|---|---|---|---|---|---|---|---|
| | 8 | 7 | 6 | 5 | 4 | 3 | 2 | 1 | | |
| GROUP B1 | 0 | 0 | 0 | 0 | 0 | 0 | 0 | 1 | $C_1^8$ (8 COMBINATIONS) | $W_1^8 \sim W_{127}^8$ |
| | 1 | 0 | 0 | 0 | 0 | 0 | 0 | 0 | | |
| | 0 | 0 | 0 | 0 | 0 | 0 | 1 | 1 | $C_2^8$ (28 COMBINATIONS) | 127 COMBINATIONS |
| | 1 | 1 | 0 | 0 | 0 | 0 | 0 | 0 | | |
| | 0 | 0 | 0 | 0 | 0 | 1 | 1 | 1 | $C_3^8$ (56 COMBINATIONS) | |
| | 1 | 1 | 1 | 0 | 0 | 0 | 0 | 0 | | |
| | 0 | 0 | 0 | 0 | 1 | 1 | 1 | 1 | $C_{4-1}^8$ (35 COMBINATIONS) | |
| | 0 | 1 | 1 | 1 | 1 | 0 | 0 | 0 | | |
| | 1 | 0 | 0 | 0 | 0 | 1 | 1 | 1 | $C_{4-2}^8$ (35 COMBINATIONS) | $W_{128}^8 \sim W_{254}^8$ |
| | 1 | 1 | 1 | 1 | 0 | 0 | 0 | 0 | | |
| GROUP B2 | 0 | 0 | 0 | 1 | 1 | 1 | 1 | 1 | $C_5^8$ (56 COMBINATIONS) | 127 COMBINATIONS |
| | 1 | 1 | 1 | 1 | 1 | 0 | 0 | 0 | | |
| | 0 | 0 | 1 | 1 | 1 | 1 | 1 | 1 | $C_6^8$ (28 COMBINATIONS) | |
| | 1 | 1 | 1 | 1 | 1 | 1 | 0 | 0 | | |
| | 0 | 1 | 1 | 1 | 1 | 1 | 1 | 1 | $C_7^8$ (8 COMBINATIONS) | |
| | 1 | 1 | 1 | 1 | 1 | 1 | 1 | 0 | | |
| GROUP C | 1 | 1 | 1 | 1 | 1 | 1 | 1 | 1 | $C_8^8$ | 1 COMBINATION |

EP 0 138 593 B1

# Fig.9

| NO. OF WEIGHING MACHINE | | | | | | | | NO. OF COMBINATIONS |
|---|---|---|---|---|---|---|---|---|
| 8 | 7 | 6 | 5 | 4 | 3 | 2 | 1 | |
| 0 | 0 | 0 | 0 | 0 | 0 | 0 | 1 | |
| 0 | 0 | 0 | 0 | 0 | 0 | 1 | 1 | |
| 0 | 0 | 0 | 0 | 0 | 1 | 0 | 0 | |
| 0 | 0 | 0 | 0 | 1 | 0 | 0 | 0 | $C_1^8$ |
| 0 | 0 | 0 | 1 | 0 | 0 | 0 | 0 | |
| 0 | 0 | 1 | 0 | 0 | 0 | 0 | 0 | |
| 0 | 1 | 0 | 0 | 0 | 0 | 0 | 0 | |
| 1 | 0 | 0 | 0 | 0 | 0 | 0 | 0 | |
| 0 | 0 | 0 | 0 | 0 | 0 | 1 | 1 | |
| 0 | 0 | 0 | 0 | 0 | 1 | 0 | 1 | |
| 0 | 0 | 0 | 0 | 0 | 1 | 1 | 0 | |
| 0 | 0 | 0 | 0 | 1 | 0 | 0 | 1 | |
| 0 | 0 | 0 | 0 | 1 | 0 | 1 | 0 | $C_2^8$ |
| | | | ⌇ | | | | | |
| 1 | 0 | 0 | 1 | 0 | 0 | 0 | 0 | |
| 1 | 0 | 1 | 0 | 0 | 0 | 0 | 0 | |
| 1 | 1 | 0 | 0 | 0 | 0 | 0 | 0 | |
| 0 | 0 | 0 | 0 | 0 | 1 | 1 | 1 | |
| 0 | 0 | 0 | 0 | 1 | 0 | 1 | 1 | |
| 0 | 0 | 0 | 0 | 1 | 1 | 1 | 0 | |
| 0 | 0 | 0 | 1 | 0 | 0 | 1 | 1 | |
| 0 | 0 | 0 | 1 | 0 | 1 | 0 | 1 | $C_3^8$ |
| | | | ⌇ | | | | | |
| 1 | 1 | 0 | 0 | 1 | 0 | 0 | 0 | |
| 1 | 1 | 0 | 1 | 0 | 0 | 0 | 0 | |
| 1 | 1 | 1 | 0 | 0 | 0 | 0 | 0 | |
| 0 | 0 | 0 | 0 | 1 | 1 | 1 | 1 | |
| 0 | 0 | 0 | 1 | 0 | 1 | 1 | 1 | |
| 0 | 0 | 0 | 1 | 1 | 0 | 1 | 1 | |
| 0 | 0 | 0 | 1 | 1 | 1 | 0 | 1 | |
| 0 | 0 | 0 | 1 | 1 | 1 | 1 | 0 | $C_{4-1}^8$ |
| | | | ⌇ | | | | | |
| 0 | 1 | 1 | 1 | 0 | 0 | 1 | 0 | |
| 0 | 1 | 1 | 1 | 0 | 1 | 0 | 0 | |
| 0 | 1 | 1 | 1 | 1 | 0 | 0 | 0 | |

# Fig. 10

START

COMPUTE TOTAL WEIGHT $W^8$ of 8 HEADS — a

COMPUTE $W_3^2$ IN GROUP A — b

READ $i$TH COMBINATION PATTERN — c

COMPUTE TOTAL COMBINATORIAL WEIGHT $W_i^8$ — d

COMPUTE $W^8 - W_i^8 = \overline{W}_i^8$ — e

COMPARE $W_i^8$ AND $\overline{W}_i^8$ — f

ADD $W_i^8$ AND $W_j^2$ — k

COMPARE $\alpha$ AND $\beta$ — $\ell$    $|\alpha| < \beta$    m    PROCESS

NO    ADD AND COMPARE $(W_1^2, W_2^2, W_3^2)$ AND $W_i^8$ — n    YES

NO    ADD AND COMPARE $(W_1^2, W_2^2, W_3^2)$ AND $\overline{W}_i^8$ — o    YES

IS COMPUTATION OF ALL DATA IN GROUPS $B_1, B_2, A$ COMPLETED ? — q    NO    YES

SPECIFY $\overline{W}_i^8$ IN GROUP $B_2$ — p

f

COMPARE $\alpha$ AND $\beta$ FOR $W_i^8$ — g    $|\alpha| < \beta$

PROCESS — h

COMPARE $\alpha$ AND $\beta$ FOR $\overline{W}_i^8$ — i    $|\alpha| < \beta$

PROCESS — j